## Europäisches Patentamt
## European Patent Office
## Office européen des brevets

(11) Publication number: **0 108 398 B1**

(12) **EUROPEAN PATENT SPECIFICATION**

(45) Date of publication of patent specification: **16.05.90**

(51) Int. Cl.⁵: **A 01 B 63/00**

(21) Application number: **83110990.5**

(22) Date of filing: **03.11.83**

(54) Control system in a tractor.

(30) Priority: **04.11.82 FI 823777**

(43) Date of publication of application:
**16.05.84 Bulletin 84/20**

(45) Publication of the grant of the patent:
**16.05.90 Bulletin 90/20**

(84) Designated Contracting States:
**DE FR GB SE**

(56) References cited:
**EP-A-0 043 725**
**GB-A-1 503 592**
**US-A-4 132 273**

**POWER FARMING, vol. 61, no. 9, September 1982, pages 39-41, Sutton, Surrey, GB; "Dial and switch implement hitch"**

(73) Proprietor: **Valmet Oy**
**Punanotkonkatu 2**
**SF-00130 Helsinki 13 (FI)**

(72) Inventor: **Hannukainen, Hannu**
**Tellervonkatu 14-16 B1**
**SF-40200 Jyväskylä 20 (FI)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

## Description

The present invention is concerning a control system for the lifting means or equivalent work implement of a tractor according to the classifying portion of claim 1.

A control system of that kind is described in EP—A 0043 725. In this known control system for the work implements of a tractor a signal representing the control deviation is sampled by a sampling device and supplied to a control unit in the form of a logic table. The sampling device is provided in order to achieve a filtering of noise, which otherwise would have bad influences on the control system. The output signal of the sampling device is always supplied to the control unit and checked there according to several conditions listed in a certain column of the logic table thereof. In order to avoid that solenoid valves of the work implements are not turned off too frequently, the sampling frequency is set at about 20 Hz which frequency is assumed to be sufficient for the hydraulic power lifting system of the work implements.

In this known control system, consequently, it cannot be avoided that, in some adverse conditions, the solenoid valves are opened and closed continuously in the frequency of 20 Hz for a longer period of time. The solenoid valves therefore could even be destroyed.

The most common work implements of a tractor provided with integral lifting attachment are various towing jobs, such as ploughing, harrowing, trailer pulling, pulling a sowing fertilizer and equivalent. Other common jobs in which the tractor is the pulling or pushing prime mover include municipal technology works and bog milling. Work performances of this kind usually have some dominant factor, for instance the ploughing depth in ploughing, a certain suspension force, i.e. a given pressure in the work cylinder of the lifting attachment when pulling a sowing fertilizer, the brushing depth or the brushing pressure against the surface in street repair work, the milling depth in bog milling, etc. It would be to advantage in practical work if said dominant factor could be adjusted and, when needed, kept substantially constant during the work.

Concerning further state of art associated with the present invention, reference is made by way of examples to FR Patents Nos. 1,374,855, 2,088,533, 2,093,952, 2,171,967 and to the US Patents Nos. 3,505,577 and 3,736,845. Moreover, reference is made to the Finnish Patents by the present applicant Nos. 48 959 and 54 981, the last-mentioned being equivalent to GB Patent No. 1,503,592. In the last-mentioned Finnish Patent No. 54 981 it has been disclosed a tractor control system, in particular an electronic control system, comprising means for measuring a factor dominating the work performance of the tractor and depending on the state and position of the hydraulic actuating attachments fixedly mounted on the tractor or detachable therefrom, such as ploughing depth and/or position of the lifting arms and/or the position of the working implement and/or the pressure in a work cylinder, and means for measuring quantities indicating the operational state of the tractor, such as the overload on its engine and/or the slip of its wheels, in said system a quantity derived from the factor dominating the system being used to govern the hydraulic control member of the working implement actuator.

It is considered novel in the last-mentioned patent that exertion of influence on said control member is managed by means of a non-linear unit known in itself in the art and which is characterized by a so-called dead range outside which by means of the control system a correction is effected in the correct direction to the dominating factor by mediation of the working implement actuator, and that the quantities indicating the operational state of the tractor act in the control system in the manner of follower control on a variable controlling the dominant factor, most advantageously over a non-linear unit so that by a change of the dominant factor up to a given limit only, the slip of the tractor wheels and/or the overloading of its engine is reduced.

The control system disclosed in the Finnish Patent No. 54 981, mentioned in the foregoing, has however the drawback that signals from various pick-ups which are unessential, or outright erroneous, have an effect on the control system. Said sources of interference are several: e.g. strong vibration of the tractor and work implement or movements of the pick-up by sudden abrupt impact of the tractor against an obstacle. Endeavours could naturally be made to avoid the effect of such erroneous signals by the aid of low pass filters or equivalent analog arrangements, but they introduce detrimental delays in the control circuit, such as delays due to the time constants of RC-circuits.

It is the object of the present invention to provide a control system according to the classifying portion of claim 1 by which an unnecessary actuation of the valves of the actuators can surely be avoided.

According to the invention this object is achieved by the advantageous measures as indicated in the characterizing portion of claim 1.

Hence, according to the invention, a dead range is so placed on the time plane that rapid "peaks" occurring during the time under control of length e.g. about 50—100 ms which are unessential from the viewpoint of the working will be completely disregarded even if a transgression with regard to the dead range should occur. As mentioned, unessential peaks may in practice be introduced, e.g. from the ambience through interference or owing to movement of the pick-up when running against an obstacle. Furthermore, if the actual value oscillates rapidly the actuator will be subjected to great strain. Thus, the invention has a considerable calming effect on the control event. The dead range may be realized e.g. by the sampling principle, while other electronic embodiments, such as digital filters, may equally be contemplated.

As taught by the invention, a control system for a tractor can be realized which performs the measurement and processing of the factors dominating the performance e.g. of a working implement attached to the three-point attachment of the tractor's lifting means and, on the basis of the result, performs a control which is appropriate for the existing situation. The control performed by the system of the invention aims at optimizing the work performance in several respects. In addition, endeavours are made towards lower wear and tear of the components of certain mechanical systems.

According to an advantageous embodiment of the invention, the logical operations required therein are carried out digitally. The digital operations block is disposed between an analog unit and an output stage controlling the actuator. In this manner, it is possible to append, clearly and positively, to the control various boundary conditions which are defined by logical statements. By means of said digital control there is obtained a high interference threshold, in practice one amounting to several volts. The digital unit proper may be a combinatory logic or programmable logic circuit, or a microprocessor. The data to be injected into the digital unit may come e.g. from switches, setting potentiometres, limit switches or other external devices, either mechanical or electronic.

An advantageous actuator governing apparatus in the control system of the invention is characterized in that it does not interfere with the actual lifting events managed over a manual directional valve, instead of which it loads the hydraulic cylinder with pressurized oil, or unloads it, at low flow levels in connection with the control process by a so-called mini-valve. A mini-valve is understood to an electrohydraulic valve installed in parallel with the control valve proper, intended to control oil flows amounting to about 25—30% of the main flow and loaded with electric step functions.

The invention is described in detail in the following, reference being made to an embodiment presented in the figures of the drawing attached, to the details of which the invention is in no way narrowly confined.

Fig. 1 presents an advantageous control system according to the invention, mainly in the form of a block diagram.

Fig. 2 presents the characteristic curve of the non-linear element employed in the invention, which is characterized by a dead range.

In the figure, the elements 1 and 2 represent position and traction resistance pick-ups which supply an electric signal $c_1$, respectively $c_2$, proportional to the quantity in question. The pick-ups 1 and 2 are for example pick-ups measuring an air gap, i.e., operating without parts subject to wear. The lifting means are in the figure schematically presented by the component indicated with the reference numeral 25, primarily illustrating the lifting arms which are on one hand connected to a lifting cylinder 27 known in prior art and on the other hand to the pull rods of the tractor's three-point lifting means. The reference numeral 26 indicates a mechanical linkage by which the traction resistance sensing using the pick-up 2 is effected.

A ratio member 3 presents a mixer to which are carried the electrical position and traction resistance signals $c_1$ and $c_2$ and, furthermore, a mixing ratio signal d from a control potentiometer 19. The ratio member 3 determines which one is emphasized as position criterion in the control, the traction resistance or the position.

The numerals 0, 1 beside the control potentiometer 19 indicate that when the signal d represents the value 0, the ratio member 3 supplies as control signal b representing the actual value the signal $c_1$ supplied by the pick-up 1, whereas the signal $c_2$ has no effect. On the other hand the value 1 implies the opposite condition: the signal $c_2$ is supplied as control signal b, whereas the signal $c_1$ has no effect. The value $d=0.5$ represents the situation in which the control signal d is influenced with equal weight by both signals $c_1$ and $c_2$. In practice, the selected procedure is for instance to form with the ratio member 3 the unweighted mean of the signals $c_1$ and $c_2$.

The unit 4 stands for a differential element known in the art and having the task to supply to the control electronics, in the form of an electric signal, the difference e (the control deviation) between the set point value a which is supplied by a setting member 20 and the actual value b as realized. The error signal e is amplified by a means 5 to a level $e_1$ appropriate for subsequent circuit elements.

Blocks 6, 7, 8, 9, 10, 11 and 12 represent an operation block realizing the dead range. The switch 6 is used to take samples from an error value $e_1$ often enough, storing them in a memory 7 carried out by analog technology, the error signal $e_1$ stored being further amplified to the level $e_2$ and processed with regard to its amplitude in the blocks 9 and 12. The sampling frequency of the switch 6 is for instance about $f_o=1/T_o=20$ Hz.

The sampling phase just described may be replaced by another equivalent procedure, e.g. by digital filters.

The block 9 determines limits of sensitivity Ty and Ta of control, which are set symmetrically by the aid of a member 21. The unit 12 examines whether transgression of the upper limit Ty or of the lower limit Ta happens. If there is a departure from within the dead range Ty-Ta between said sensitivity limits, an operation command is given to a digital logic 13, which then attends to appropriate correcting action. As soon as transgression of the upper limit Ty or of the lower limit Ta in the respective direction and requiring correction has been noted, switch 6 is opened by means of a digital summing member 10. Thereby continuous monitoring of the way in which the situation develops is achieved, as well as action within a closed control loop. By operating in this manner outside the dead range Ty-Ta and when the control is activated, control will proceed e.g. like standard P control when the switch 6 is continuously closed and the control block in the form of a pulse unit 11 of the sampling means exerts no influence. This mode of operation is maintained until the control deviation signal $e_1$ enters an area which is within the dead range Ty-Ta. The switch 6 is then momentarily closed and becomes controlled by the control block 11 of the sampling unit, the sampling taking place, as has been described, at the frequency $f_o$. The control block 11 produces narrow pulses, a time interval To of which is defining the span of the dead range, i.e., the upper limit frequency $f_o/2$ of the delay-free and digital "low pass filter" defined by the blocks 6, 10 and 11.

As presented above, as soon as one sample pulse of the signal $e_1$ represents a value which is outside the dead range Ty-Ta, transition of the system to continuous "monitoring" and control takes place. However, the system of the invention may, with a view to even further elimination of interference, be carried out by means of a logic circuit such that the value of the control deviation has to fall outside the dead range twice or several consecutive times before the control system is activated to perform continuous monitoring and control. In this connection the sampling frequency $f_o$ may of course be accordingly increased.

The digital logic 13 is a decision-making block having the task to examine whether or not a given corrective measure of control is feasible. To the digital logic 13 are conveyed in the form of input data a number N of conditions, e.g. switch data $k_1$ ... $k_N$. The digital logic 13 may also, when certain conditions are met, by-pass the control loop, whereby the lifting means 25 is controlled directly through an actuating member in the form of a mini-valve 16. Some of these by-passing situations will be described in the following.

The electronic blocks have to be told which is the current operational state of the system. This datum is supplied by means of the main control switch. In other words, the control system is either on or off. As a further condition, there may be received from an external device the command to cover the control system at given moments when the situation so requires. One condition is the switch data supplied by the transporting situation. This will, of course, cover the control system.

A block 17 attends to control of leakage compensation for the lifting cylinder 27 of the lifting means 25. A switch signal 18 together with a position signal $c_1'$ is processed in the block 17. When in the transport position, the lifting arms are raised, a change of position $c_1$, caused e.g. by leakage of the lifting cylinder 27, is observed and a compensating lift correction is applied to a signal $k_o$ through the blocks 17 and 13.

Blocks 14 and 15 represent the output stage, in other words, the matching elements between the digital block and the actuating member 16. Components 22 and 23 represent the control solenoids of the actuating member 16. Lifting takes place when the digital logic 13 gives a lifting command to the output stage 14, which in turn generates the electric current required for a solenoid 22 of the lifting side of the magnetic valve. This conveys the stem of the valve 16 into a position such that the free flow path is closed and oil can enter the lifting cylinder 27.

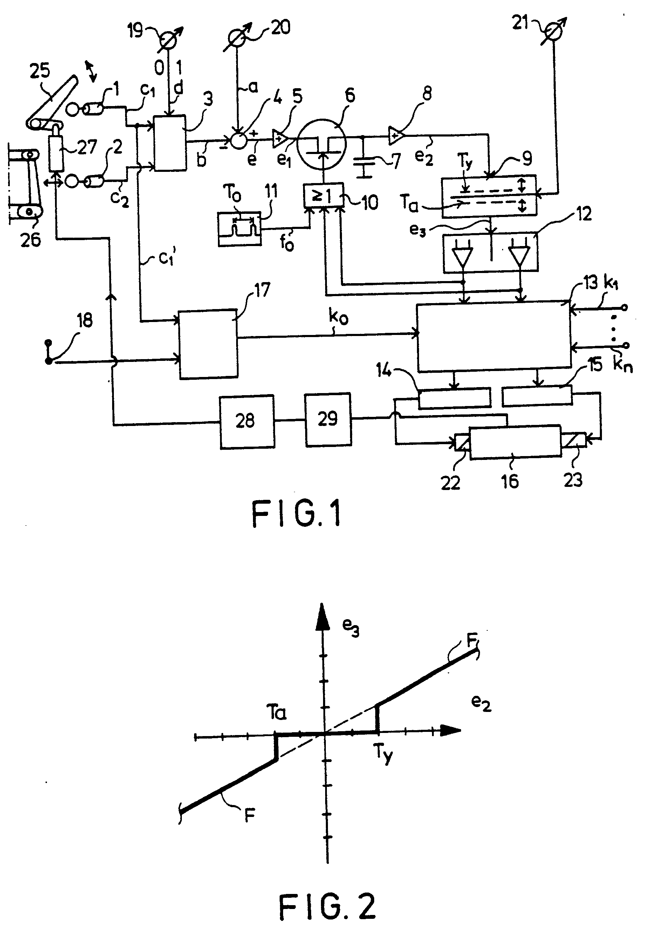

In Fig. 1, block 29 illustrates the hydraulic control valve proper, governed by the mini-valve 16. Block 28 represents the pump in the hydraulic system and other apparatus by which pressure is supplied to the lifting cylinder 27, which is, as stated above, preferably a single action cylinder. The lifting cylinder 27 turns arms 25, to which pull arms of the three-point lifting attachment (not depicted) have been connected. In the foregoing, $f_o$ about 10-20 Hz has been given as one of the possible sampling frequencies. In practice, this sampling frequency may vary within comparatively wide limits, e.g. defined by the kind of work and by the speed. If the system is so arranged that the transition from sampling to continuous control and following is not made until the amplitude of more than one sampling pulse has gone outside the dead range Ty-Ta, the sampling frequency naturally must be increased in the same proportion. In practice, the sampling frequency can as a rule be maintained in the range from 1 to 100 Hz.

In Fig. 2 is demonstrated an advantageous characteristic curve, F, of the non-linear element 9. As can be seen in Fig. 2, the output signal $e_3$ of the non-linear element 9 is 0 when the input signal $e_2$ is in the dead range Ty-Ta. After the input signal $e_2$ has passed the dead range, an output signal $e_3$ is obtained, the amplitude of which is e.g. directly proportional to the amplitude of the input signal $e_2$.

The dynamics of the lifting activity need not be considered in this connection. They are determined by the hydraulic circuit, by the design of the mini-valve and by the pump in the control circuit. The starting point for the setting of the dynamics is that the closed control loop has to carry out the correction movement (about 1—3 cm) during a period which is some hundreds of milliseconds, and this is usually a short enough delay with regard to the system.

For instance in a case of the working depth, such as the plowing depth, being the dominant factor the lowering correcting is enacted by the aid of the lowering command supplied by the digital logic 13 through the output stage 15 and the solenoid 23. The lifting cylinder 27 is single-acting, that is, the plough itself takes care of lowering as soon as the lowering control gives free the path of the pressurized oil to the oil sump.

In the present invention there is essential, in addition to the dead range above described, the feature that the set point value and actual value signals, and the error signals therefrom derived, are in analog form to begin with and that transition is later made to using digital signals derived from these analog signals, whereby the system's sensitivity to interference is reduced and versatile processing of the signals as well as perfect functioning of the system in all respects are enabled.

## Claims

1. A control system for the lifting means or equivalent work implement of a tractor, said control system having an electronic part designed in analog/digital technique and performing the measurement of a factor or factors dominating the performance of an actuator (27) of said work implement, forming a signal (b) representing the controlled condition value on the basis of said factor resp. factors, establishing a signal (a) representing the set-point value, and forming by subtraction of said values (a−b) a signal (e) representing the control deviation and said control system having an analog/digital control unit (13) and means (9, 12) in which are set limit values (Ty, Ta) defining a dead range (Ty-Ta) characterized in that said signal (e) is sampled by a sampling device (5 to 8) or an equivalent device in a sampling frequency ($f_o$) and supplied to said analog/digital control unit (13) which is correspondingly driving a control means of said actuator, such as a solenoid valve (16, 22, 23) and that said means in which are set said limit values (Ty, Ta) are comparator means (9, 12) by which the outer pulses (e2) of said sampling device. are processed in time, wherein the samping device is so controllable that it is generating a signal ($e_2$) continuously following said signal (e) representing the control deviation when the amplitude of said pulses (e2) is leaving one or more times said dead range (Ty-Ta), the sampling operation being adopted again when the amplitude of the continous signal ($e_2$) of the sampling device is again within said dead range (Ty-Ta).

2. A control system according to claim 1, characterized in that in the forward leading branch of the control system information is at first transferable in analog form, and that in connection with realizing the dead range which is in the time dimension, transition is possible to digital information transfer and processing.

3. A control system according to claim 1 or 2, intended for controlling the ploughing depth or traction resistance of a work implement, such as ploughs attached to the threepoint linkage of an agricultural tractor, characterized in that, in the system, both the position of the lifting arms which represents the ploughing depth or another equivalent working depth and the traction resistance acting on the tractor from the work implement are measurable by the aid of pick-ups (1, 2), that a control means (19) acting upon a ratio member (3) receive the signals (c1, c2) from the pick-ups (1, 2) mentioned for setting the relative weight coefficients of the said two different signals, and that the ratio member (3) sends out the signal (b) representing the controlled condition value, said signal representing both the ploughing or other equivalent working depth and the traction resistance with appropriate relative weight factors, and acting as an actual value signal (b) in the control system.

4. A control system according to any one of claims 1 to 3, characterized in that the governing means of the control system is a magnetic valve (16) with at least two control solenoids (22, 23), preferably a so-called mini-valve.

5. A control system according to any one of claims 1 to 4, characterized in that the system comprises in the forward branch of the control circuit after said comparator means (9, 12) an analog/digital control unit (13), which has received a compilation of data, e.g. switch data ($k_1$ ... $k_N$), which is the basis of the decision for or against the control measure suggested by the control system.

6. A control system according to any one of claims 1 to 5, charcterized in that carrying a connection from suitable external means to said analog/digital control unit (13) makes it possible to cover the automatics at appropriate times, e.g. in transport situations.

7. A control system according to any one of claims 1 to 6, characterized in that in the system has been provided control of the compensation for leakage of the lifting cylinder (27) of the lifting means (25) in that a signal (c1) indicating the position during transport of the lifting arms and the changes taking place therein is transferable by the aid of a leakage compensation control member (17) to the analog/digital control unit (13) applying a compensation lifting correction bypassing the control branch proper.

8. A control system according to any one of claims 1 to 7, characterized in that the sampling frequency ($f_o$) is in the order of 1 ... 100 Hz, preferably about 10 ... 20 Hz.

9. A control system according to any one of claims 1 to 8, characterized in that said comparator unit (9, 12) comprises a sensitivity setting unit (9), in which by the aid of a particular control member (21) the limits (Ty, Ta) of said dead range are adjustable.

10. A control system according to any one of claims 1 to 9, characterized in that the pulses picked up by said sampling means (5 to 8) are storable in a memory (7), which preferably is accompished by analog technique, and that said comparator block (9, 12) serves for processing the error value ($e_2$) stored in the memory (7) as to its amplitude.

## Patentansprüche

1. Steuersystem für die Hubvorrichtung oder das gleichwertige Arbeitsgerät eines Traktors, wobei das Steuersystem einen elektronischen Teil aufweist, der in Analog/Digital-Technik ausgelegt ist und die Messung eines Faktors oder von Faktoren, die die Arbeitsweise eines Stellantriebs (27) des genannten Arbeitsgeräts beherrschen, durchführt, ein Signal (b) erzeugt, das den geregelten Zustandswert auf der Grundlage des besagten Faktors bzw. der besagten Faktoren darstellt, ein Signal (a) bildet, das den Sollwert verkörpert, und durch Subtraktion der genannten Werte (a-b) ein Signal (e) erzeugt, das die Regelabweichung repräsentiert, und wobei das besagte Steuersystem ein Analog/Digital-Steuergerät (13) sowie Einrichtungen (9, 12), in welchen einen Unempfindlichkeitsbereich (Ty-Ta) bestimmende Grenzwerte (Ty, Ta) festgelegt werden, aufweist, dadurch gekennzeichnet, daß Das genannte Signal (e) durch eine Abtastvorrichtung (5 bis 8) oder eine gleichwertige Vorrichtung mit einer Abtastfrequenz (fo) abgetastet und dem erwähnten Ananlog/Digital-Steuergerät (13) zugeführt wird, welches entsprechend eine Steuereinrichtung des genannten Stellantriebs, wie ein Magnetventil (16, 22, 23), betreibt, und daß die Einrichtungen, in denen die besagten Grenzwerte (Ty, Ta) festgelegt werden, Vergleichereinrichtungen (9, 12) sind, durch die die Ausgangsimpulse (e2) der genannten Abtastvorrichtung zeitlich verarbeitet werden, wobei die Abtastvorrichtung so regelbar ist, daß sie ein Signal (e₂) kontinuierlich im Anschluß an das besagte Signal (e), das die Regelabweichung repräsentiert, erzeugt, wenn die Amplitude der genannten Impulse (e2) ein- oder mehrmals den erwähnten Unempfindlichkeitsbereich (Ty-Ta) verläßt, und wobei der Abtastvorgang erneut aufgenommen wird, wenn sich die Amplitude des kontinuierlichen Signals (e₂) der Abtastvorrichtung wieder innerhalb des erwähnten Unempfindlichkeitsbereichs (Ty-Ta) befindet.

2. Steuersystem nach Anspruch 1, dadurch gekennzeichnet, daß in dem vorwärtsführenden Zweig des Steuersystems eine Information zuerst in analoger Form übertragbar ist und daß in Verbindung mit einem Realisieren des Unempfindlichkeitsbereichs, der in einer Zeitdimension vorhanden ist, ein Übergang zu einer digitalen Informationsübertragung sowie -verarbeitung möglich ist.

3. Steuersystem nach Anspruch 1 oder 2, das zur Regelung der Furchentiefe oder des Zugwiderstandes eines Arbeitsgeräts, wie am Dreipunktanbau eines landwirtschaftlichen Traktors angebrachten Pflügen, bestimmt ist, dadurch gekennzeichnet, daß in dem System sowohl die Position der Hubarme, die die Furchentiefe oder eine andere gleichwertige Arbeitstiefe darstellt, als auch der auf den Traktor von dem Arbeitsgerät einwirkende Zugwiderstand mit Hilfe von Meßfühlern (1, 2) meßbar sind, daß eine auf ein Verhältnisglied (3) einwirkende Kontrolleinrichtung (19) die Signale (c1, c2) von den genannten Meßfühlern (1, 2) empfängt, um die relativen Wichtungskoeffizienten der besagten zwei unterschiedlichen Signale festzusetzen, und daß das Verhältnisglied (3) das den geregelten Zustandswert darstellende Signal (b) abgibt, wobei das genannte Signal sowohl die Furchen- oder die gleichwertige Arbeitstiefe als auch den Zugwiderstand mit geeigneten relativen Wichtungsfaktoren repräsentiert und als ein Ist-Wertsignal (b) in dem Steuersystem wirkt.

4. Steuersystem nach einem der Ansprüche 1 bis 3, dadurch gekennzeichnet, daß die Regelungseinrichtung des Steuersystems ein Magnetventil (16) mit wenigstens zwei Steuerspulen (22, 23), vorzugsweise ein sog. Mini-Ventil, ist.

5. Steuersystem nach einem der Ansprüche 1 bis 4, dadurch gekennzeichnet, daß das System im vorwärtsführenden Zweig des Steuerkreises hinter den genannten Vergleichereinrichtungen (9, 12) ein Analog/Digital-Steuergerät (13) enthält, das eine Datenzusammenstellung, z.B. Schaltdaten (k1 ... kN) empfangen hat, welche die Grundlage der Entscheidung für oder gegen die von dem Steuersystem empfohlene Regelmaßnahme ist.

6. Steuersystem nach einem der Ansprüche 1 bis 5, dadurch gekennzeichnet, daß das Führen einer Verbindung von geeigneten externen Einrichtungen zum genannten Ananlog/Digital-Steuergerät (13) es ermöglicht, die Automatik zu angemessenen Zeiten, z.B. in Transportsituationen, zu beherrschen.

7. Steuersystem nach einem der Ansprüche 1 bis 6, dadurch gekennzeichnet, daß in dem System eine Kompensationsregelung für eine Leckage des Hubzylinders (27) der Hubeinrichtung (25) vorgesehen worden ist, indem ein die Position der Hubarme während eines Transports und die darin auftretenden Änderungen anzeigendes Signal (c1) mit Hilfe eines Leckagekompensation-Regelgliedes (17) zum Analog/Digital-Steuergerät (13) übertragbar ist, das eine Kompensationshubkorrektur, die den eigentlichen Regelzweig umgeht, aufbringt.

8. Steuergerät nach einem der Ansprüche 1 bis 7, dadurch gekennzeichnet, daß die Abtastfrequenz (fo) in der Größenordnung von 1 ... 100 Hz, vorzugsweise bei etwa 10 ... 20 Hz, liegt.

9. Steuersystem nach einem der Ansprüche 1 bis 8, dadurch gekennzeichnet, daß die genannte Vergleichereinheit (9, 12) eine Empfindlichkeit-Einstelleinheit (9) umfaßt, in welcher mittels eines besonderen Regelgliedes (21) die Grenzwerte (Ty, Ta) des besagten Unempfindlichkeitsbereichs einstellbar sind.

10. Steuersystem nach einem der Ansprüche 1 bis 9, dadurch gekennzeichnet, daß die von den genannten Abtasteinrichtungen (5 bis 8) aufgenommenen Impulse in einem Speicher (7) speicherbar sind, was vorzugsweise durch Analogtechnik ausgeführt wird, und daß der genannte Vergleicherblock (9, 12) zur Verarbeitung des in dem Speicher (7) gespeicherten Fehlerwerts (e₂) bezüglich seiner Amplitude dient.

**Revendications**

1. Système de commande pour des moyens de levage ou un outil de travail équivalent d'un tracteur, ce système de commande possédant une partie électronique conçue selon une technique analogique/numérique et réalisant la mesure d'un ou plusieurs facteurs maitrisant l'effet d'un actionneur (27) de cet outil de travail, produisant un signal (b) qui représente la valeur de la situation maitrisée sur la base de ce ou de ces facteurs, établissant un signal (a) qui représente la valeur de consigne, et formant par soustraction de cette valeur (a-b) un signal (e) représentant la variation de commande, ce système de commande possédant un bloc de commande analogique/numérique (13) et des moyens (9, 12) dans lesquels sont stockés les valeurs limites (Ty, Ta) définissant une zone morte (Ty-Ta), caractérisé en ce que ce signal (e) est choisi par un dispositif d'échantillonnage (5 à 8) ou un dispositif équivalent avec une fréquence d'échantillonnage ($f_o$) et est transmis à l'ensemble analogique/numérique (13) qui entraine de façon correspondante un moyen de commande de cet actionneur, tel qu'une électro-vanne (16, 22, 23) et ces moyens qui déterminent les valeurs limites (Ty, Ta) sont des comparateurs (9, 12) par lesquels les impulsions de sortie de ce système d'échantillonage sont traitées dans le temps, le dispositif d'échantillonage pouvant être commandé de telle sorte qu'il se produise en continu un signal ($e_2$) à la suite du signal (e) représentant la variation de commande quand l'amplitude de cette impulsion ($e_2$) représente une ou plusieurs fois cette zone morte (Ty-Ta), l'opération d'échantillonnage se produisant à nouveau quand l'amplitude du signal continu ($e_2$) du dispositif de balayage se trouve à nouveau dans la zone morte (Ty-Ta).

2. Système de commande selon la revendication 1, caractérisé en ce que dans la branche du système de commande conduisant vers l'avant, l'information est transférable dans un premier temps sous forme analogique, et en ce qu'en relation avec la réalisation de la zone morte qui est dans la dimension temps, il est possible de la transformer et de la traiter en mode numérique.

3. Système de commande selon la revendication 1 ou 2, conçue pour commander la profondeur de labourage ou la résistance à la traction d'un outil de travail, tel que des charrues liées à l'attelage trois points d'un tracteur agricole, caractérisé en ce que, dans le système, les deux positions des bras de levage qui représentent la profondeur du labourage ou une profondeur de travail équivalente sont mesurables à l'aide de capteurs (1, 2), en ce que des moyens de commande (19) agissant sur un élément proportionnel (3) reçoivent les signaux (c1, c2) des capteurs (1, 2), mentionnés pour déterminer les coefficients pondéraux relatifs de ces deux signaux différents et en ce que l'élément proportionnel (3) émet le signal (b) représentant la valve de situation (u) maitrisée, ce signal représentant à la fois les deux profondeurs de la charrue ou d'un outil équivalent et la résistance à la traction avec les facteurs de masse appropriés, et agissant sur un signal de valeur réele (b) dans le système de commande.

4. Système de commande selon l'une des revendications 1 à 3, caractérisé en ce que le moyen d'action sur le système de commande est une vanne magnétique avec au moins deux bobines de commande (22, 23) de préférence du type dit mini-valve.

5. Système de commande selon l'une des revendications 1 à 4, caracatérisé en ce que le système comporte dans la branche du circuit de commande dirigée vers l'avant après le comparateur, un bloc de commande analogique/numérique (13) qui a reçu un ensemble de données compilées, par exemple des données de commutation ($k_1 \ldots k_n$) qui constitue la base de la décision pour on contre la mesure de commande suggérée par le système de commande.

6. Système de commande selon l'une des revendciations 1 à 5, caractérisé en ce que transportant une connexion à partir de moyens analogique extérieurs convenables vers l'ensemble de commande numérique (13) il rend possible de protéger les dispositifs automatiques dans les moments voulus, par exemple dans des situations de transport.

7. Système de commande selon l'une des revendications 1 à 6, caractérisé en ce que le système de commande a été muni de la compensation pour la fuite du vérin (27) du moyen de levage (25) dans lequel un signal $c_1$ indiquant la position pendant le transport des bras de levage et le changement y prenant place est transférable à l'aide d'un élément de commande de compensation de fuite à un ensemble analogique/numérique (13) appliquant une élévation compensatrice court-circuitant la branche de commande proprement dite.

8. Système de commande selon l'une des revendications 1 à 7, caractérisé en ce que la fréquence d'échantillonnage ($f_o$) est de l'ordre de 1 à 100 Hz, de préférence entre 10 et 20 Hz.

9. Système de commande selon l'une des revendications 1 à 8, caractérisé en ce que le comparateur (9, 12) comporte un ensemble déterminant la sensibilité (9) dans lequel à l'aide d'un élément de commande particulier (21) on peut ajuster les limites (Ty, Ta) de la zone morte.

10. Système de commande selon l'une des revendications 1 à 9, caractérisé en ce que les impulsions captées par les moyens d'échanillonnage (5 à 8) peuvent être stockées dans une mémoire (7) qui est de préférence réalisée par une technique analogique, et le comparateur (9, 12) sert au traitement de la valeur de l'erreur ($e_2$) stockée dans la mémoire (7) sous forme de son amplitude.

FIG.1

FIG.2